# EUROPÄISCHE PATENTSCHRIFT

(11) **EP 2 615 959 B1**
(45) Veröffentlichungstag und Bekanntmachung des Hinweises auf die Patenterteilung: **01.03.2017**
(21) Anmeldenummer: 11764084.7
(22) Anmeldetag: 23.08.2011
(51) Int. Cl.: A47L 11/40, A47L 5/30, A47L 11/10, A47L 11/24

(54) **ANTRIEBSSYSTEM FÜR EIN REINIGUNGSGERÄT SOWIE REINIGUNGSGERÄT**
DRIVE SYSTEM FOR A CLEANING DEVICE AND CLEANING DEVICE
SYSTÈME D'ENTRAÎNEMENT POUR UN DISPOSITIF DE NETTOYAGE ET DISPOSITIV DE NETTOYAGE

(30) Priorität: 13.09.2010 DE 102010045096
(43) Veröffentlichungstag der Anmeldung: 24.07.2013
(73) Patentinhaber: Carl Freudenberg KG, 69469 Weinheim (DE)
(72) Erfinder: WEIS, Norbert, 69469 Weinheim (DE); FLATH, Johannes, 68519 Viernheim (DE); GIBIS, Karl-Ludwig, 67117 Lumburgerhof (DE)
(86) Internationale Anmeldenummer: PCT/EP2011/004222
(87) Internationale Veröffentlichungsnummer: WO 2012/034634

(56) Entgegenhaltungen:
- WO-A1-2007/008148
- GB-A- 2 038 615
- US-A- 5 634 237
- US-A1- 2004 255 425

## Beschreibung

### Technisches Gebiet

Die Erfindung betrifft Antriebssysteme für automatische Reinigungsgeräte sowie Reinigungsgeräte, bei denen durch Überstreichen einer von dem Reinigungsgerät überfahrenen Fläche eine Reinigung der Fläche bewirkt wird.

### Stand der Technik

Nächstliegender Stand der Technik wird in der GB 2411820 gesehen, die ein Antriebssystem gemäß dem Oberbegriff von Anspruch 1 zeigt.

Reinigungsgeräte für die Bodenreinigung sind allgemein bekannt. Diese weisen in der Regel eine rotierende Rolle mit zum Beispiel einem Bürstenaufsatz auf, die zusätzlich zu einer Bewegung des Reinigungsgeräts über eine Bodenfläche durch eine Rotation ein Überstreichen einer Bodenfläche mit dem Reinigungsaufsatz durchführt. Derartige Reinigungsgeräte werden häufig manuell bewegt. Mit Verbesserungen der Batterietechnologien ist es zusehends möglich, automatisierte Reinigungsgeräte herzustellen, die eine Bodenfläche in zufälligen Bewegungen überfahren und so die Bodenfläche reinigen.

Bei automatischen Reinigungsgeräten fahren diese in der Regel geradlinig über einen Bereich der Bodenfläche, bis sie auf ein Hindernis stoßen. An dem Hindernis wird dann eine Richtungsänderung vorgenommen, die in der Regel zufällig ist und das Reinigungsgerät in der geänderten Richtung weiterbewegt.

Beispielsweise ist aus der Druckschrift US 4,173,809 ein batteriebetriebener Staubsauger bekannt, dessen Antriebseinheit in beliebige Richtungen drehbare Kugeln aufweist, die ihre Bewegungsrichtung beliebig ändern können.

Weiterhin ist aus der Druckschrift US 6,571,415 B2 ein Bodenreinigungsgerät mit eigenem Antrieb bekannt, bei dem eine Antriebseinheit eine Hohlkugel umfasst, die im Wesentlichen frei beweglich in einem Rahmen angeordnet ist. Innerhalb der Hohlkugel ist ein nicht im Schwerpunkt befindlicher Motor angeordnet ist, durch den die Hohlkugel in eine zufällige Bewegung bewegt wird. Dadurch wird das Reinigungsgerät in zufälligen Bewegungen über den Boden bewegt und so die Bodenfläche gereinigt.

Die obigen Antriebseinheiten für die Reinigungsgeräte haben aufgrund der kugelförmigen Antriebselemente nur einen oder wenige Kontaktpunkte zur Bodenoberfläche, wodurch die Übertragung von Antriebsenergie zur Fortbewegung des Reinigungsgeräts begrenzt ist. Dies ist insbesondere dann nachteilig, wenn das Reinigungsgerät zur Reinigung ein Reinigungstuch oder eine Reinigungsbürste aufweist, die mit der zu reinigenden Bodenfläche flächigen Kontakt haben soll und somit eine hohe Antriebskraft notwendig ist, um das Reinigungsgerät in Bewegung zu setzen.

Weiterhin ist es wünschenswert, zusätzlich zur Antriebskraft zur Bewegung des Reinigungsgeräts über die Bodenfläche auch eine zusätzliche Bewegung zum Beispiel eine Rotationsbewegung eines über die Bodenfläche streichenden Reinigungselementes zu bewirken, um die Reinigungswirkung zu verbessern.

Es ist daher Aufgabe der vorliegenden Erfindung, ein Antriebssystem für ein Reinigungsgerät sowie ein Reinigungsgerät zur Verfügung zu stellen, bei dem eine ausreichende Antriebskraft auf die Bodenfläche übertragen werden kann, um ein Reinigungselement zur Reinigung verschmutzter Böden zu bewegen. Es ist weiterhin eine Aufgabe der vorliegenden Erfindung, eine zum Vortrieb zusätzliche Bewegung des Reinigungselementes durchzuführen, um die Reinigungswirkung zu verbessern.

### Offenbarung der Erfindung

Diese Aufgaben werden durch das Antriebssystem für ein Reinigungsgerät gemäß Anspruch 1 sowie durch das Reinigungsgerät gemäß dem nebengeordneten Anspruch gelöst.

Weitere vorteilhafte Ausgestaltungen sind in den abhängigen Ansprüchen angegeben.

Gemäß einem ersten Aspekt ist ein Antriebssystem zum Antreiben eines automatischen Reinigungsgeräts vorgesehen. Das Antriebssystem umfasst:
- eine Trägereinheit;
- einen an der Trägereinheit befestigten Antriebsmotor;
- eine Antriebswelle, die rotierbar an der Trägereinheit angeordnet ist und durch den Antriebsmotor antreibbar ist; und
- eine Vortriebseinrichtung, die an der Antriebswelle angeordnet ist und um die Antriebswelle rotierbar ist, wobei die Vortriebseinrichtung mit der Antriebswelle gekoppelt ist, um einen Vortrieb quer zur Erstreckung der Antriebswelle zu generieren und um bei Hemmung des Vortriebs eine Rotation der Vortriebseinrichtung bezüglich der Trägereinheit zu bewirken.

Eine Idee des obigen Antriebssystems besteht darin, einen Antriebsmotor vorzusehen, der an einer Trägereinheit angeordnet ist, die relativ zu einer Vortriebseinrichtung um eine Antriebswelle rotierbar ist. Der Antriebsmotor ist mit der Antriebswelle gekoppelt, um diese anzutreiben. Die Antriebswelle ist weiterhin z.B. über ein Getriebe mit einer oder mehreren Antriebsrollen verbunden, deren Antriebsachse senkrecht zur Antriebswelle verläuft und die den Vortrieb generieren, wobei sich die Antriebsachse mit der Antriebswelle bewegt.

Ein Vortrieb durch das Antriebssystem ergibt sich dann, wenn einer Rotation der Trägereinheit ein Widerstand entgegenwirkt, wie es in der Regel der Fall ist, wenn diese z.B. ein Reinigungselement trägt, das auf der zu reinigenden Bodenfläche aufliegt und somit einen Reibkontakt herstellt. Dabei werden dadurch z.B. eine oder mehrere Antriebsrollen angetrieben und bewegen somit das Reinigungsgerät in einer translatorischen Bewegung über die Bodenfläche. Da auch der Vortriebseinrichtung der Reibungswiderstand durch das Aufliegen des Reinigungselementes auf der Bodenfläche entgegenwirkt, wird die mit der Antriebswelle gekoppelte Trägereinheit um die Antriebswelle gedreht und so das Reinigungselement über die zu reinigende Bodenfläche in einer Rotationsbewegung bewegt.

Wird die translatorische Bewegung über die Bodenfläche behindert oder blockiert, so führt dies zu einem Verdrehen der Vortriebseinrichtung bezüglich der Trägereinheit, wodurch sich die Richtung der weiteren Vortriebsbewegung ändert und das mit dem Antriebssystem betriebene Reinigungsgerät in einer anderen zufälligen Richtung weiterbewegt wird.

Die Verwendung eines solchen Antriebssystems für Reinigungsgeräte erzielt eine deutlich höhere Reinigungswirkung aufgrund der höheren zulässigen Reibung des Reinigungselementes mit der Bodenfläche als dies aus dem Stand der Technik bekannt ist. Darüber hinaus ist die Navigation um Hindernisse wesentlich weicher, wodurch die insgesamt während eines bestimmten Zeitraums überstrichene Reinigungsfläche vergrößert ist. Durch das gekoppelte Antriebssystem, bei dem die Rotation und die Vortriebsbewegung über ein Antriebssystem miteinander gekoppelt sind, wird erreicht, dass sich das Reinigungsgerät auch enger an Hindernisse und Kanten anschmiegt und länger an diesen entlang fährt. Dies verbessert die Reinigung gerade dieser kritischen Bereiche der Bodenfläche.

Weiterhin kann die Trägereinheit ein die Vortriebseinrichtung umgebendes Halteelement tragen, an dem ein Reinigungselement, insbesondere ein Reinigungstuch und/oder eine Reinigungsbürste, anbringbar ist.

Die Trägereinheit kann ausgebildet sein, um das Reinigungselement um die Vortriebseinrichtung zu rotieren, wenn die Vortriebseinrichtung einen Vortrieb generiert.

Insbesondere kann die Vortriebseinrichtung so mit der Antriebswelle gekoppelt sein, dass bei Hemmung des Vortriebs über ein Schwellenmaß hinaus die Rotation der Vortriebseinrichtung einsetzt.

Die Antriebswelle kann mit einem Dämpfungselement gekoppelt sein, wobei das Dämpfungselement eine Dämpfung aufweist, um eine vorgegebene Verteilung der von dem Antriebsmotor bereitgestellten Antriebsenergie auf eine Rotation der Trägereinheit und den Vortrieb einzustellen.

Es kann vorgesehen sein, dass die Vortriebseinrichtung mindestens eine Antriebsrolle aufweist, die an einer mit der Antriebswelle gekoppelten Antriebsachse angeordnet ist, wobei die Antriebsachse quer zur Antriebswelle verläuft und über ein Getriebe mit dieser gekoppelt ist.

Weiterhin kann die Vortriebseinrichtung mindestens eine Hilfsrolle umfassen, die seitlich versetzt zur Antriebsachse an dem Basisteil angebracht ist, wobei die Drehachse der Hilfsrolle im Wesentlichen parallel zur Antriebsachse verläuft. Dadurch wird eine stabilere Geradeausfahrt und eine Erhöhung der Reibung der Vortriebseinrichtung gegen ein Verdrehen erreicht, so dass das Vorsehen der Hilfsrolle eine Möglichkeit des Einstellens des Antriebssystems bezüglich einer Verteilung der Antriebsenergie auf Vortrieb und Rotation der Trägereinheit bietet.

Gemäß einem weiteren Aspekt ist ein Reinigungsgerät mit dem obigen Antriebssystem vorgesehen. Das Antriebssystem kann von einem Gehäuse umgeben sein, das insbesondere federnd in Richtung der Antriebswelle mit dem Antriebssystem verbunden ist. Die Federung vermeidet, dass bei Belastung des Gehäuses von oben, die Belastung direkt auf die Vortriebseinrichtung wirkt. Vielmehr wird erreicht, dass die Kraft durch das Gehäuse aufgenommen wird, insbesondere dann, wenn das Gehäuse auf die Bodenfläche aufsetzt bevor der Federweg ausgeschöpft ist.

Weiterhin kann das Gehäuse eine unrunde Form bezüglich einer Ebene parallel zur Ebene des Vortriebs der Vortriebseinrichtung aufweisen. Dadurch kann zuverlässig gewährleistet werden, dass eine Rotation des Gehäuses blockiert wird, wenn das Reinigungsgerät auf ein Hindernis fährt, so dass die Rotation der Vortriebseinrichtung unmittelbar einsetzt.

Die Trägereinheit kann mit dem Halteelement, insbesondere einem Haltering, versehen sein, das parallel zur Ebene des Vortriebs der Vortriebseinrichtung angeordnet ist.

Das Halteelement kann mit einer Einrichtung zum Befestigen eines Reinigungselements, insbesondere zum Herstellen einer Klettverbindung mit dem Reinigungselement, versehen sein.

Weiterhin kann das Halteelement von einem Beschwerungselement umgeben sein, um ein angebrachtes Reinigungselement auf eine Bodenfläche zu drücken.

Gemäß einer Ausführungsform kann die Trägereinheit rotierbar um das Gehäuse ausgeführt sein.

Weiterhin kann das Reinigungsgerät mit einer Steuereinheit zum Ansteuern einer Drehrichtung des Antriebsmotors versehen sein. Die Steuereinheit kann ausgebildet sein, um den Antriebsmotor zeitlich gesteuert oder durch eine manuelle Bedienung umzuschalten. Dadurch kann einerseits eine bessere Abdeckung der Reinigung in komplexen Räumen und andererseits eine bessere Befreiung aus Engstellen bzw. Lösung von Hindernissen erreicht werden.

Gemäß einer Ausführungsform kann die Steuereinheit ausgebildet sein, um bei Feststellen einer vollständigen Blockierung der Translations- und Rotationsbewegung der Vortriebseinrichtung die Drehrichtung des Antriebsmotors umzuschalten. Auf diese Weise können Blockadesituationen in verbesserter Weise aufgelöst werden.

### Kurzbeschreibung der Zeichnung

Bevorzugte Ausführungsformen werden nachfolgend anhand der beigefügten Zeichnungen näher erläutert. Es zeigen:
- Fig. 1: eine schematische Darstellung des Antriebssystems für ein Reinigungsgerät;
- Fig. 2: eine Querschnittsdarstellung durch eine Ausführungsform eines Reinigungsgeräts zum Wischen einer Bodenfläche; und
- Fig. 3: eine perspektivische Darstellung einer Unterseite des Reinigungsgeräts der Fig. 2.

### Ausführung der Erfindung

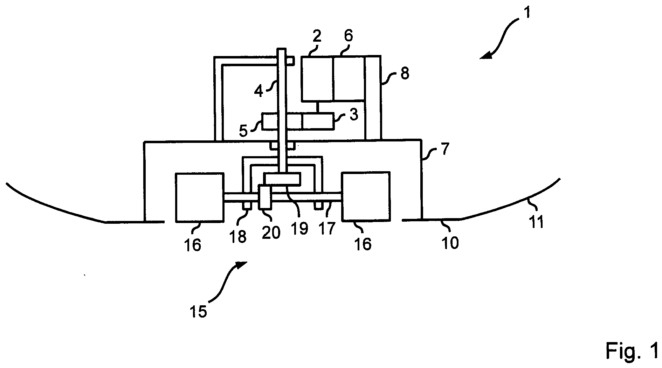

Fig. 1 zeigt eine schematische Darstellung eines Antriebssystems 1 zum Betreiben eines Reinigungsgerätes. Das Antriebssystem 1 umfasst eine Antriebseinheit 2, die beispielsweise als Elektromotor ausgebildet ist. Der Elektromotor 2 wird über einen Energiespeicher 6 mit elektrischer Energie versorgt, um den Antriebsmotor 2 anzutreiben.

Der Elektromotor 2 ist über ein Getriebe mit einer Antriebswelle 4 gekoppelt, um diese anzutreiben. Bei Einsatz in einem Reinigungsgerät ist die Antriebswelle 4 im Wesentlichen senkrecht zur zu reinigenden Bodenfläche des Reinigungsgerätes gelagert. Insbesondere kann der Elektromotor 2 dazu eine Abtriebswelle umfassen, die ein Ritzel 3 trägt, über das eine Antriebswelle 4 angetrieben wird. Um das Antriebsmoment auf die Antriebswelle 4 zu übernehmen, kann die Antriebswelle 4 mit einem Zahnrad 5 versehen sein, das mit dem Ritzel 3 in Eingriff ist.

Weiterhin weist das Antriebssystem ein Basisteil 7 auf, an dem der Elektromotor 2 und der Energiespeicher 6 befestigt ist zum Beispiel über eine Halterung 8. Weiterhin dient das Basisteil 7 dazu, die Antriebswelle 4 in im Wesentlichen senkrechter Stellung zu lagern, so dass die Antriebswelle 4 bezüglich des Basisteils 7 drehbeweglich angeordnet ist. Die Lagerung der Antriebswelle 4 erfolgt vorzugsweise an zwei voneinander beabstandeten Lagerpunkten.

Das Basisteil 7 ist fest mit einem Haltering 10 als Trägereinheit verbunden, der bei Einsatz in dem Reinigungsgerät bodennah und im Wesentlichen parallel zur Bodenfläche angeordnet ist. Der Haltering 10 dient zur Aufnahme eines Reinigungstuches, einer Reinigungsbürste und dergleichen als Reinigungselement. Das Reinigungselement kann mit dem Haltering 10 vorzugsweise in lösbarer Weise verbunden werden, beispielsweise durch eine Klettverbindung, und ist somit austauschbar. Um bei Verwendung eines Reinigungstuchs den Kontakt des Reinigungstuchs auf einer möglichst großen Fläche mit der Bodenfläche zu gewährleisten, kann an dem Außenumfang des Halterings 10 ein flexibles Beschwerungselement 11 vorgesehen sein, das im Wesentlichen ringförmig den Haltering 10 umgibt.

Das an dem Haltering 10 befestigbare Reinigungstuch ist vorzugsweise ebenfalls ringförmig und kann einen Außendurchmesser, der gleich oder größer ist als der Außendurchmesser des Beschwerungselements, und einen Innendurchmesser aufweisen, der im Wesentlichen dem Innendurchmesser des Halterings 10 entspricht. Im auf die Bodenfläche aufgesetzten Zustand liegt dann das Reinigungstuch flächig auf der Bodenfläche auf und wird an seinem Innenrand durch den Haltering 10 und nach außen hin durch das Beschwerungselement 11 auf die Bodenfläche gedrückt.

Im von dem Haltering 10 umgebenen Innenbereich befindet sich eine Vortriebseinrichtung 15 mit zwei Antriebsrollen 16, die starr über eine Antriebsachse 17 miteinander verbunden sind. Die Antriebsrollen 16 sind vorzugsweise walzenförmig ausgebildet und aus einem Material, wie z.B. Gummi, gefertigt, das eine hohe Reibung mit gängigen zu reinigenden Bodenflächen aufweist. Weiterhin können die Antriebsrollen mit sich quer zur Umfangsrichtung erstreckenden Kerben versehen sein, um die Reibung weiter zu erhöhen. Die Antriebsachse 17 wird durch eine Achshalterung 18 in waagerechter Position bzw. im Wesentlichen senkrecht zur Antriebswelle 4 gehalten. Die Achshalterung 18 ist dazu an der Antriebswelle 4 angeordnet, so dass sich zwar die Antriebswelle unabhängig von der Achshalterung 18 drehen kann, jedoch die Achshalterung 18 die Achse 17 in einer zur Antriebswelle 4 rechtwinkeligen Anordnung fixiert.

An einem der Vortriebseinrichtung 15 zugewandten Ende der Antriebswelle 4 ist ein Zahnkranz 19 vorgesehen, der mit einem Zahnrad 20 in Eingriff steht, das auf der Antriebsachse 17 fest angeordnet ist. Auf diese Weise kann eine Drehung der Antriebswelle 4 in eine Drehung der Antriebsachse 17 umgesetzt werden. Ein Drehen der Antriebswelle 4 führt somit zu einer Rotation der Antriebsachse 17 und folglich zu einem Vortrieb über die Antriebsrollen 16.

Durch das oben beschriebene Antriebssystem 1 verteilt sich die von dem Elektromotor 2 bereitgestellte Antriebsenergie, die über die Antriebswelle 4 übertragen wird, zum Einen auf den Vortrieb über die Antriebsrollen 16 und zum Anderen auf eine Drehbewegung des Basisteils 7 über der Bodenfläche, auf der das Antriebssystem mit den Antriebsrollen 16 aufliegt. Auf diese Weise kann ein an dem Haltering 10 angeordnetes Reinigungselement um die Vortriebseinrichtung 15 rotiert werden.

Im abgestimmten Zustand, bei dem beispielsweise das Reinigungselement ein Reinigungstuch darstellt, das eine glatte Oberfläche wie zum Parkett, Laminat, Fliesen oder Stein oder dergleichen reinigen soll, führt der Einsatz des obigen Antriebssystems zu einer Vortriebsbewegung durch Drehung der Antriebsrollen 16 und gleichzeitig zu einer Rotation des Halterings 10 um die Vortriebseinrichtung 15, so dass ein damit verbundenes Reinigungstuch um die Abtriebswelle 4 rotiert.

Stößt ein mit diesem Antriebssystem 1 betriebenes Reinigungsgerät an ein Hindernis, so wird zunächst die Drehung des Basisteils 7 mit dem Haltering 10 gehemmt oder blockiert, und die Antriebsenergie, die zuvor über die Antriebswelle 4 auf den Haltering 10 übertragen wurde, wird nun vollständig auf die Vortriebseinrichtung 15 übertragen. Wenn dort eine Drehung der Antriebsrollen 16, die vorzugsweise eine hohe Reibung mit der Bodenfläche aufweisen, durch das Hindernis ebenfalls blockiert wird, wird die Antriebsenergie auf der Antriebswelle 4 gegen die Reibung der Antriebswellen 17 auf der Bodenfläche in eine Drehbewegung der Vortriebseinrichtung 15 um die Abtriebswelle 4 umgesetzt. Die benötigte Kraft für die Drehbewegung der Vortriebseinrichtung 15 ist hoch, da bei der Drehbewegung mindestens eine der Antriebsrollen 16 gegen die Reibung über die Bodenfläche bewegt wird, und so findet eine Drehung der Vortriebseinrichtung 15 vorzugsweise nur dann statt, wenn sowohl die Vortriebsbewegung als auch die Rotationsbewegung des Basisteils 7 mit dem daran befindlichen Haltering 10 blockiert ist.

Die Drehbewegung der Vortriebseinrichtung 15 dauert so lange an, wie die Hemmung der Vortriebsbewegung anhält. Sobald die Hemmung des Reinigungsgeräts aufgrund der geänderten Vortriebsrichtung aufhört und die Antriebsrollen 16 der Vortriebseinrichtung 15 wieder einen Vortrieb des Antriebssystems 1 generieren, stoppt die Drehung der Vortriebseinrichtung 15. Mit anderen Worten hält die Rotation der Vortriebseinrichtung 15 solange an, bis ein Teil der Antriebsenergie entweder in eine Drehbewegung des Basisteils 7 und dem daran befestigten Reinigungselement und/oder in eine Vortriebsbewegung über die Antriebsrollen 16 führt. Sobald ein bestimmter Mindestanteil der Antriebsenergie wieder in einen Vortrieb umgesetzt wird oder für eine Rotation des Reinigungselements verwendet wird, reicht die Antriebsenergie für eine Drehung der Vortriebseinrichtung 15 auf der Bodenfläche nicht mehr aus und die Drehung der Vortriebseinrichtung 15 auf der Bodenfläche stoppt aufgrund der hohen Reibung der Antriebsrollen 16. Danach bewegt das Antriebssystem 1 das Reinigungsgerät im Wesentlichen geradlinig in eine neue Richtung, die durch die Ausrichtung der Vortriebseinrichtung 15 zum Zeitpunkt des Anhaltens der Drehung der Vortriebseinrichtung 15 bestimmt ist.

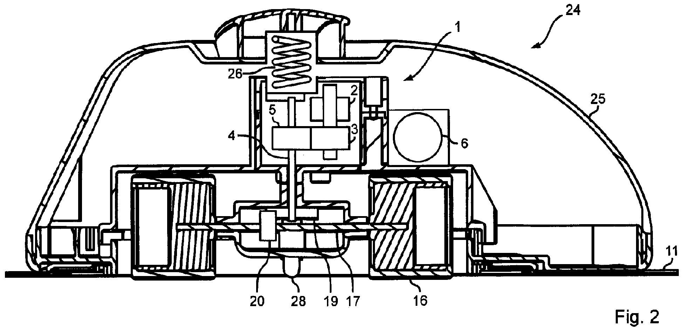

In Fig. 2 ist ein Querschnitt eines Reinigungsgerätes mit dem Antriebssystem 1 entlang der senkrecht angeordneten Antriebswelle 4 gezeigt. Man erkennt die Anordnung der Antriebseinheit 1 in einem die Antriebseinheit 1 umschließenden Gehäuse 25.

Das Gehäuse 25 ist im Wesentlichen gefedert mit der Antriebseinheit 1 verbunden, so dass ein Druck auf das Äußere des Gehäuses 25 zu einem Aufsetzen des Gehäuses 25 auf die Bodenfläche führt, ohne dass der Druck über die Antriebseinheit 1 direkt auf die Antriebsrollen 16 ausgeübt wird. Dadurch kann die Antriebseinheit 1 gegen Einwirkungen auf das Gehäuse 25 geschützt werden. Das Gehäuse 25 ist dazu über mindestens eine Feder 26 mit dem Antriebssystem 1 verbunden.

Weiterhin ist das Gehäuse 25 so mit dem Basisteil 7 gekoppelt, dass eine Rotation des Basisteils 7 auf der Bodenfläche von dem Gehäuse 25 entsprechend ebenfalls ausgeführt wird, d.h. das Gehäuse wird von dem Basisteil 7 des Antriebssystems 1 mitgenommen. Das Gehäuse 25 weist, wie in der perspektivischen Draufsicht auf die Unterseite des Reinigungsgeräts 24 dargestellt, eine unrunde Form auf, so dass bei Auftreffen auf ein Hindernis die Drehbewegung des Gehäuses 25 und somit des damit verbundenen Basisteils 7 blockiert wird und ein Reiben eines Außenrandes des Gehäuses 25 an dem blockierenden Gegenstand möglichst vermieden wird. Die sofortige Blockierung der Drehbewegung des Gehäuses 25 führt dann zu einer Drehung der Antriebsachse 17 zwischen den beiden Antriebsrollen 16, so dass das Reinigungsgerät 24 infolge die Richtung ändert, bis es auf ein nächstes Hindernis stößt.

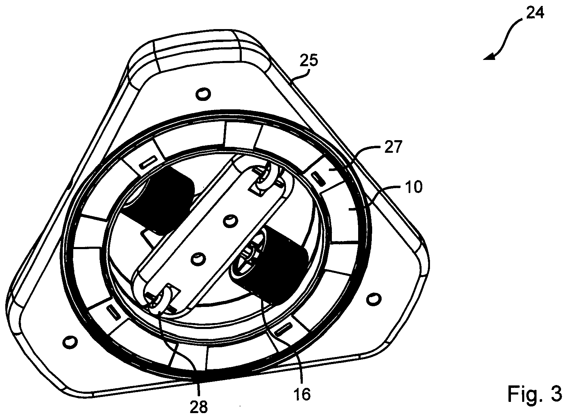

Die Abbildung der Fig. 3 zeigt die Unterseite des Reinigungsgeräts 24 mit dem Haltering 10, an dem das Reinigungselement zum Beispiel in Form eines Reinigungstuches oder dergleichen angebracht wird. Das Anbringen kann beispielsweise durch Klettverbindungen erfolgen, wobei im gezeigten Ausführungsbeispiel an dem Haltering 10 abschnittsweise Klettstücke 27 angeordnet sind.

Die Vortriebseinrichtung 15 des in Fig. 3 gezeigten Reinigungsgeräts 24 kann weiterhin eines oder mehrere Hilfsräder 28 aufweisen, die in einer Richtung senkrecht zur Antriebsachse 17 beabstandet von den Antriebsrollen 16 angeordnet sind und eine zu den Antriebsrollen 16 parallele Drehachse aufweisen. Die Hilfsräder 28 sind im Wesentlichen so bezüglich der Antriebsrollen 16 angeordnet, dass deren Auflagefläche etwa in gleicher Ebene zu der Auflagefläche der Antriebsrollen 16 angeordnet ist.

Die Hilfsräder 28 dienen dazu, die Geradeausfahrt der Vortriebseinheit 15 zu verbessern und den Widerstand der Vortriebseinheit 15 gegen eine Rotation zu erhöhen, so dass ein größerer Teil der Rotationsenergie auf das Basisteil 7 bzw. auf das Gehäuse 25 übertragen wird. Bei Rotieren der Vortriebseinrichtung 15 werden das eine oder die mehreren Hilfsräder 28 quer zu ihrer Laufrichtung über die Bodenfläche bewegt. Die Hilfsräder 28 können jedoch auch mit einer Feder beaufschlagt an die Bodenfläche gedrückt werden, wobei die Federkraft eingestellt werden kann, um das Verhalten des Reinigungsgerätes 24 bei Auftreffen auf ein Hindernis einzustellen.

Alternativ oder zusätzlich kann die Drehbarkeit der Vortriebseinrichtung auch durch Wahl des Materials der Antriebsrollen 16 und/oder durch die Wahl der Größe der Auflageflächen der Antriebsrollen 16, die die Reibung der Antriebsrollen 16 auf der Bodenfläche bestimmen, eingestellt werden. So kann der Widerstand der Vortriebseinrichtung gegen eine Drehbewegung festgelegt werden.

Gemäß einer weiteren Ausführungsform kann ein Dämpfungselement zwischen der Vortriebseinheit 15 und dem Basisteil 7 vorgesehen werden, um den Anteil der in einer Drehung des Basisteils 7 umgesetzten Antriebsenergie zu beeinflussen. Das Dämpfungselement 29 kann bezüglich des relativen Winkels der Vortriebseinheit 15 zum Basisteil 7 variabel sein, so dass sich Vorzugsrichtungen der Vortriebseinheit 15 bezüglich des Gehäuses 25 und die Drehzahl der Drehung des Basisteils einstellen lassen.

In einer alternativen Ausführungsform ist das Gehäuse 25 um das Basisteil des Antriebssystems 1 rotierbar ausgebildet. In diesem Fall wird das Reinigungselement während der Bewegung des Reinigungsgeräts nicht rotiert.

Weiterhin kann das Reinigungsgerät 24 mit einer Steuereinheit zum Ansteuern einer Drehrichtung des Antriebsmotors 2 versehen sein. Die Steuereinheit kann ausgebildet sein, um den Antriebsmotor 2 zeitlich gesteuert oder durch eine manuelle Bedienung umzuschalten. Dadurch kann einerseits eine bessere Abdeckung der Reinigung in komplexen Räumen und andererseits eine bessere Befreiung des Reinigungsgeräts 24 aus Engstellen bzw. Lösung von Hindernissen erreicht werden.

Weiterhin kann bei Feststellen einer vollständigen Blockierung der Translations-und Rotationsbewegung der Vortriebseinrichtung 15 die Drehrichtung des Antriebsmotors 2 umgeschaltet werden, um Blockadesituationen aufzulösen. Das Detektieren der vollständigen Blockierung der Translations- und Rotationsbewegung kann beispielsweise durch Überwachen eines Motorstroms oder durch geeignete Bewegungssensoren detektiert werden.

## Patentansprüche

1. Antriebssystem (1) zum Antreiben eines automatischen Reinigungsgeräts, umfassend:
- eine Trägereinheit (7, 10);
- einen an der Trägereinheit (7, 10) befestigten Antriebsmotor (2);
- eine Antriebswelle (4), die rotierbar an der Trägereinheit (7, 10) angeordnet ist und durch den Antriebsmotor (2) antreibbar ist;
- eine Vortriebseinrichtung (15), die an der Antriebswelle (4) angeordnet ist und um die Antriebswelle rotierbar ist,
wobei die Vortriebseinrichtung (15) mit der Antriebswelle (4) gekoppelt ist, um einen Vortrieb quer zur Erstreckung der Antriebswelle (4) zu generieren und um bei Hemmung des Vortriebs eine Rotation der Vortriebseinrichtung (15) bezüglich der Trägereinheit zu bewirken,
**dadurch gekennzeichnet, dass**
die Trägereinheit (7, 10) ein die Vortriebseinrichtung (15) umgebendes Halteelement (10) trägt, an dem ein Reinigungselement, insbesondere ein Reinigungstuch und/oder eine Reinigungsbürste anbringbar ist, und
dass die Trägereinheit (7, 10) ausgebildet ist, um das Reinigungselement um die Vortriebseinrichtung (15) zu rotieren, wenn die Vortriebseinrichtung (15) einen Vortrieb generiert.

2. Antriebssystem (1) nach Anspruch 1, wobei die Vortriebseinrichtung (15) so mit der Antriebswelle (4) gekoppelt ist, dass bei Hemmung des Vortriebs über ein Schwellenmaß hinaus die Rotation der Vortriebseinrichtung (15) einsetzt.

3. Antriebssystem (1) nach einem der Ansprüche 1 bis 2, wobei die Antriebswelle mit einem Dämpfungselement gekoppelt ist, wobei das Dämpfungselement eine Dämpfung aufweist, um eine vorgegebene Verteilung der von dem Antriebsmotor (2) bereitgestellten Antriebsenergie auf eine Rotation der Trägereinheit (7, 10) und den Vortrieb einzustellen.

4. Antriebssystem (1) nach einem der Ansprüche 1 bis 3, wobei die Vortriebseinrichtung (15) mindestens eine Antriebsrolle aufweist, die an einer mit der Antriebswelle (4) gekoppelten Antriebsachse angeordnet ist, wobei die Antriebsachse quer zur Antriebswelle (4) verläuft und über ein Getriebe mit dieser gekoppelt ist.

5. Antriebssystem (1) nach einem der Ansprüche 1 bis 4, wobei die Vortriebseinrichtung (15) mindestens eine Hilfsrolle (28) umfasst, die seitlich versetzt zur Antriebsachse angeordnet ist, wobei die Drehachse der Hilfsrolle (28) im Wesentlichen parallel zur Antriebsachse verläuft.

6. Reinigungsgerät (24) mit einem Antriebssystem (1) nach einem der Ansprüche 1 bis 5.

7. Reinigungsgerät (24) nach Anspruch 6, wobei das das Antriebssystem (1) von einem Gehäuse (25) umgeben ist, das insbesondere federnd in Richtung der Antriebswelle (4) mit dem Antriebssystem (1) verbunden ist.

8. Reinigungsgerät (24) nach Anspruch 6 oder 7, wobei das Gehäuse (25) eine unrunde Form bezüglich einer Ebene parallel zur Ebene des Vortriebs der Vortriebseinrichtung (15) aufweist.

9. Reinigungsgerät (24) nach einem der Ansprüche 6 bis 8, wobei die Trägereinheit mit dem Halteelement (10), insbesondere einem Haltering, versehen ist, der parallel zur Ebene des Vortriebs der Vortriebseinrichtung (15) angeordnet ist.

10. Reinigungsgerät (24) nach Anspruch 9, wobei das Halteelement (10) mit einer Einrichtung zum Befestigen eines Reinigungselements, insbesondere zum Herstellen einer Klettverbindung mit dem Reinigungselement versehen ist.

11. Reinigungsgerät (24) nach Anspruch 9 oder 10, wobei das Halteelement von einem Beschwerungselement umgeben ist, um ein angebrachtes Reinigungselement auf eine Bodenfläche zu drücken.

12. Reinigungsgerät (24) nach einem der Ansprüche 6 bis 11, wobei die Trägereinheit (7, 10) rotierbar um das Gehäuse (25) ausgeführt ist.

13. Reinigungsgerät (24) nach einem der Ansprüche 6 bis 12 mit einer Steuereinheit zum Ansteuern einer Drehrichtung des Antriebsmotors (2), wobei die Steuereinheit ausgebildet ist, um den Antriebsmotor zeitlich gesteuert oder durch eine manuelle Bedienung umzuschalten.

14. Reinigungsgerät (24) nach einem der Ansprüche 6 bis 13, wobei die Steuereinheit ausgebildet ist, um bei Feststellen einer vollständigen Blockierung der Translations-und Rotationsbewegung der Vortriebseinrichtung die Drehrichtung des Antriebsmotors (2) umzuschalten.

## Claims

1. Drive system (1) for driving an automatic cleaning device, comprising:
- a support unit (7, 10);
- a drive motor (2) fastened to the support unit (7, 10);
- a driveshaft (4) which is arranged rotatably on the support unit (7, 10) and is driveable by the drive motor (2),
- an advancing device (15) which is arranged on the driveshaft (4) and is rotatable about the driveshaft,
wherein the advancing device (15) is coupled to the driveshaft (4) in order to generate an advance transversely with respect to the extent of the driveshaft (4) and in order, when the advance is inhibited, to bring about a rotation of the advancing device (15) with respect to the support unit,
**characterized in that** the support unit (7, 10) bears a holding element (10) which surrounds the advancing device (15) onto which a cleaning element, in particular a cleaning cloth and/or a cleaning brush, can be attached, and **in that** the support unit (7, 10) is designed to rotate the cleaning element about the advancing device (15) when the advancing device (15) generates an advance.

2. Drive system (1) according to Claim 1, wherein the advancing device (15) is coupled to the driveshaft (4) in such a manner that, when the advance is inhibited beyond a threshold extent, the advancing device (15) starts to rotate.

3. Drive system (1) according to either of Claims 1 and 2, wherein the driveshaft is coupled to a damping element, wherein the damping element has damping in order to adjust a predetermined distribution of the drive energy provided by the drive motor (2) to a rotation of the support unit (7, 10) and the advance.

4. Drive system (1) according to one of Claims 1 to 3, wherein the advancing device (15) has at least one drive roller which is arranged on a drive axle coupled to the driveshaft (4), wherein the drive axle runs transversely with respect to the driveshaft (4) and is coupled to the latter via a gearing.

5. Drive system (1) according to one of Claims 1 to 4, wherein the advancing device (15) comprises at least one auxiliary roller (28) which is arranged offset laterally with respect to the drive axle, wherein the axis of rotation of the auxiliary roller (28) runs substantially parallel to the drive axle.

6. Cleaning device (24) with a drive system (1) according to one of Claims 1 to 5.

7. Cleaning device (24) according to Claim 6, wherein the drive system (1) is surrounded by a housing (25) which is connected to the drive system (1) in particular resiliently in the direction of the driveshaft (4).

8. Cleaning device (24) according to Claim 6 or 7, wherein the housing (25) has a noncircular shape with respect to a plane parallel to the plane of the advance of the advancing device (15).

9. Cleaning device (24) according to one of Claims 6 to 8, wherein the support unit is provided with the holding element (10), in particular a holding ring, which is arranged parallel to the plane of the advance of the advancing device (15).

10. Cleaning device (24) according to Claim 9, wherein the holding element (10) is provided with a device for fastening a cleaning element, in particular for producing a touch-and-close connection to the cleaning element.

11. Cleaning device (24) according to Claim 9 or 10, wherein the holding element is surrounded by a weighting element in order to press an attached cleaning element onto a floor surface.

12. Cleaning device (24) according to one of Claims 6 to 11, wherein the support unit (7, 10) is designed to be rotatable about the housing (25).

13. Cleaning device (24) according to one of Claims 6 to 12 with a control unit for activating a direction of rotation of the drive motor (2), wherein the control unit is designed to switch over the drive motor with a time control or by manual operation.

14. Cleaning device (24) according to one of Claims 6 to 13, wherein the control unit is designed in order to switch over the direction of rotation of the drive motor (2) when complete blocking of the translational and rotational movement of the advancing device is determined.

## Revendications

1. Système d'entraînement (1) pour entraîner un appareil de nettoyage automatique, comprenant :
- une unité de support (7, 10) ;
- un moteur d'entraînement (2) fixé à l'unité de support (7, 10) ;
- un arbre d'entraînement (4) qui est disposé de manière rotative sur l'unité de support (7, 10) et qui peut être entraîné par le moteur d'entraînement (2) ;
- un dispositif d'avance (15) qui est disposé sur l'arbre d'entraînement (4) et qui peut tourner autour de l'arbre d'entraînement,
le dispositif d'avance (15) étant accouplé à l'arbre d'entraînement (4) afin de générer une avance transversalement à l'étendue de l'arbre d'entraînement (4) et, en cas de blocage de l'avance, de provoquer une rotation du dispositif d'avance (15) par rapport à l'unité de support, **caractérisé en ce que**
l'unité de support (7, 10) porte un élément de retenue (10) entourant le dispositif d'avance (15), sur lequel peut être monté un élément de nettoyage, en particulier un tissu de nettoyage et/ou une brosse de nettoyage, et
**en ce que** l'unité de support (7, 10) est réalisée pour faire tourner l'élément de nettoyage autour du dispositif d'avance (15) lorsque le dispositif d'avance (15) génère une avance.

2. Système d'entraînement (1) selon la revendication 1, dans lequel le dispositif d'avance (15) est accouplé à l'arbre d'entraînement (4) de telle sorte que lors du blocage de l'avance au-delà d'un niveau de seuil, la rotation du dispositif d'avance (15) s'établisse.

3. Système d'entraînement (1) selon l'une quelconque des revendications 1 à 2, dans lequel l'arbre d'entraînement est accouplé à un élément d'amortissement, l'élément d'amortissement présentant un amortissement pour ajuster une répartition prédéfinie de l'énergie d'entraînement fournie par le moteur d'entraînement (2) à une rotation de l'unité de support (7, 10) et à l'avance.

4. Système d'entraînement (1) selon l'une quelconque des revendications 1 à 3, dans lequel le dispositif d'avance (15) présente au moins un rouleau d'entraînement qui est disposé sur un axe d'entraînement accouplé à l'arbre d'entraînement (4), l'axe d'entraînement s'étendant transversalement à l'arbre d'entraînement (4) et étant accouplé à celui-ci par le biais d'une transmission.

5. Système d'entraînement (1) selon l'une quelconque des revendications 1 à 4, dans lequel le dispositif d'avance (15) comprend au moins un rouleau auxiliaire (28) qui est disposé de manière décalée latéralement par rapport à l'axe d'entraînement, l'axe de rotation du rouleau auxiliaire (28) s'étendant essentiellement parallèlement à l'axe d'entraînement.

6. Appareil de nettoyage (24) comprenant un système d'entraînement (1) selon l'une quelconque des revendications 1 à 5.

7. Appareil de nettoyage (24) selon la revendication 6, dans lequel le système d'entraînement (1) est entouré par un boîtier (25) qui est connecté au système d'entraînement (1) notamment de manière élastique dans la direction de l'arbre d'entraînement (4).

8. Appareil de nettoyage (24) selon la revendication 6 ou 7, dans lequel le boîtier (25) présente une forme non ronde par rapport à un plan parallèle au plan d'avance du dispositif d'avance (15).

9. Appareil de nettoyage (24) selon l'une quelconque des revendications 6 à 8, dans lequel l'unité de support est pourvue de l'élément de retenue (10), notamment d'une bague de retenue, qui est disposée parallèlement au plan d'avance du dispositif d'avance (15).

10. Appareil de nettoyage (24) selon la revendication 9, dans lequel l'élément de retenue (10) est pourvu d'un dispositif pour la fixation d'un élément de nettoyage, en particulier pour la réalisation d'une connexion de type Velcro à l'élément de nettoyage.

11. Appareil de nettoyage (24) selon la revendication 9 ou 10, dans lequel l'élément de retenue est entouré par un élément de lestage pour presser un élément de nettoyage monté sur la surface d'un sol.

12. Appareil de nettoyage (24) selon l'une quelconque des revendications 6 à 11, dans lequel l'unité de support (7, 10) est réalisée de manière rotative autour du boîtier (25).

13. Appareil de nettoyage (24) selon l'une quelconque des revendications 6 à 12, comprenant une unité de commande pour commander un sens de rotation du moteur d'entraînement (2), l'unité de commande étant réalisée de manière à commuter le moteur d'entraînement de manière commandée dans le temps ou par commande manuelle.

14. Appareil de nettoyage (24) selon l'une quelconque des revendications 6 à 13, dans lequel l'unité de commande est réalisée pour commuter le sens de rotation du moteur d'entraînement (2) lors de la constatation d'un blocage complet du mouvement de translation et de rotation du dispositif d'avance.
